(19) Europäisches Patentamt
European Patent Office
Office européen des brevets

(11) Veröffentlichungsnummer: **0 442 109 A1**

(12) # EUROPÄISCHE PATENTANMELDUNG

(21) Anmeldenummer: **90124690.0**

(51) Int. Cl.⁵: **C03C 8/14**, C04B 41/87

(22) Anmeldetag: **19.12.90**

(30) Priorität: **15.02.90 IT 1937990**

(43) Veröffentlichungstag der Anmeldung:
**21.08.91 Patentblatt 91/34**

(84) Benannte Vertragsstaaten:
**DE ES FR GB NL**

(71) Anmelder: **BAYER ITALIA S.p.A.**
**Viale Certosa 210, Caselle Postale 1243**
**I-20100 Mailand(IT)**

(72) Erfinder: **Zybell, Paul**
**Via Monte Gleno 7**
**I-24040 Dalmine GB(IT)**
Erfinder: **Broggi, Giovanni, Dr.**
**Via Trenno 144**
**Mailand(IT)**

(74) Vertreter: **Braun, Rolf, Dr. et al**
**c/o Bayer AG Konzernverwaltung RP Patente Konzern**
**W-5090 Leverkusen 1 Bayerwerk(DE)**

(54) **Keramische Engoben für den elektrostatischen Pulverauftrag und Verfahren zu deren Herstellung.**

(57) Die vorliegende Erfindung betrifft keramische Engoben in Pulverform für den elektrostatischen Pulverauftrag auf keramische Substrate und eine Verfahren zu deren Herstellung.

EP 0 442 109 A1

# KERAMISCHE ENGOBEN FÜR DEN ELEKTROSTATISCHEN PULVERAUFTRAG UND VERFAHREN ZU DEREN HERSTELLUNG

Die vorliegende Erfindung betrifft keramische Engoben in Pulverform für den elektrostatischen Pulverauftrag auf keramische Substrate und ein Verfahren zu deren Herstellung.

Es ist bekannt, daß sich Emailpulver elektrisch aufladen und im elektrischen Feld mit einer Potentialdifferenz von ca. 60.000 bis 100.000 Volt auf metallische Unterlagen aufbringen lassen. Zu diesem Zweck werden die Kornoberflächen der Emailpulver mit isolierenden Substanzen überzogen, die in einer Menge von 0,1 bis 2,0 Gew.-% den Emailfritten vor oder während der Trockenvermahlung zugesetzt werden, um einen spezifischen elektrischen Widerstand von $10^{12}$ bis $10^{16}$ Ohm • cm zu erzielen. Als isolierende Substanzen werden Silanole, Isocyanate, Siliciumstickstoffverbindungen, Karbodiimide, Chlorsilane und Organopolysiloxane eingesetzt (DE-OS 2 015 072).

Die Beschichtung von keramischen Oberflächen erfolgt entweder im Naßauftrag mittels Gießen, Spritzen, Sprenkeln und Schleudern bzw. Abwandlungen dieser Techniken oder aber im Trockenverfahren, wobei vermahlene Fritten oder Granulate auf ein in der Regel naß-engobiertes Substrat durch Sieben, Pudern oder Schütten aufgebracht wird, so daß das Granulat oder Pulver fixiert wird und beim nachfolgenden Brand glatt fließt.

Keramische Pulver lassen sich auch elektrostatisch auf keramische Oberflächen auftragen, wobei jedoch die Pulverhaftung derart gering ist, daß eine Hantierung der Teile vor dem Sinter- und Brennprozeß praktisch nicht möglich ist, da das Pulver von den Teilen abfällt.

Engoben sind Gemische, die geschmolzene keramische Fritten, keramische Rohstoffe bzw, Mineralien, Glas- bzw. Geschirrporzellanmehl und anorganische Trübungsmittel enthalten können. Diese Engoben können in gemahlener Form als wäßrige Suspensionen auf keramische Substrate aufgetragen werden, um den Farbton des Substrates zu maskieren und die Verarbeitung der nachfolgenden Überzüge oder Schichten zu verbessern, ohne daß gleichzeitig die Haftung oder die Oberflächenqualität des Fertigproduktes negativ beeinflußt wird,

Der Auftrag auf keramische Substrate erfolgt durch Gießen, Spritzen, Tauchen oder Abwandlungen dieser Techniken.

Eine Trockenverarbeitung der Engoben in Form von Pulvern im Siebauftrag oder auch elektrostatisch ist praktisch nicht möglich, weil die Pulverhaftung derart gering ist, daß eine Hantierung der Teile vor dem Sinter- bzw. Brennprozeß nicht praktikabel ist und das Pulver von den keramischen Substraten abfallen würde.

Aufgabe war es daher, keramische Engoben in Pulverform zur Verfügung zu stellen, die auf keramische Oberflächen aufgebracht werden können und eine gute Haftung auf diesen Substraten aufweisen. Diese Aufgabe konnte mit den erfindungsgemäßen keramischen Engoben gelöst werden.

Gegenstand der Erfindung sind keramische Engoben in Pulverform für den elektrostatischen Pulverauftrag auf keramische Substrate mit einer mit elektrisch isolierenden Substanzen behandelten Oberfläche, die dadurch gekennzeichnet sind, daß die elektrisch isolierenden Substanzen halogenfreie Polysiloxane oder Gemische davon sind und mit ihren reaktiven Gruppen an den Kornoberflächen der keramischen Engobepulver reagieren und in einer Menge von 0,05 bis 0,25 Gew.-%, bezogen auf die keramische Engobe, vorliegen und daß das Pulver, welches bei einer Temperatur von 70 bis 100 °C trocken gemahlen wurde bzw. nach einer Kaltvermahlung zwischen 70 und 300 °C thermisch nachbehandelt wurde, eine Mahlfeinheit von 1 bis 120 $\mu$, einen spezifischen elektrischen Widerstand von $10^{13}$ bis $10^{16}$ Ohm • cm, einen kubischen Wärmeausdehnungskoeffizienten von (120 bis 240) • $10^{-7}K^{-1}$, gemessen zwischen 20 und 300 °C, und eine Fluidität von 50 bis 90 g/30 sec aufweist.

Bevorzugt sind keramische Engobepulver, die mit Polymethylhydrogensiloxanen der Formel

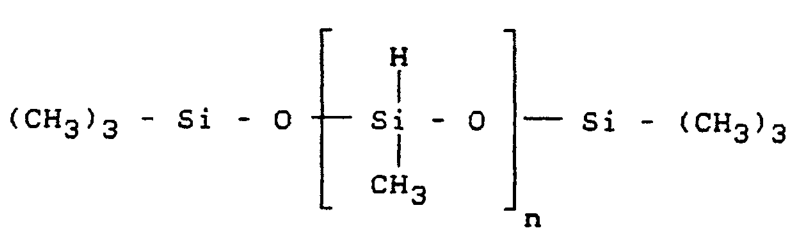

mit n = 5 bis 50 oder Gemischen davon behandelt werden.

Ein weiterer Gegenstand der Erfindung ist ein Verfahren zur Herstellung der erfindungsgemäßen keramischen Engobepulvern, welches dadurch gekennzeichnet ist, daß die den Engobepulvern entsprechenden Gemische aus geschmolzenen Keramikfritten, Keramikrohstoffen, Mineralien, Gläsern bzw. Geschirr-Porzellan und anorganischen Trübungsmitteln vor oder während der bei 70°C bis 100°C durchzuführenden gemeinsamen trockenen Mahlung bzw. vor oder während einer gemeinsamen Kaltvermahlung mit anschließender thermischer Nachbehandlung zwischen 70 und 300°C mit 0,05 bis 0,25 Gew.%-, bezogen auf die Gesamtmenge, halogenfreien mit ihren reaktiven Gruppen an den Kornoberflächen der keramischen Engoben reagierenden Polysiloxanen oder Gemischen davon behandelt werden und zu Pulvern mit einer Korngröße von 1 bis 120 $\mu$, einem spezifischen elektrischen Widerstand von $10^{13}$ bis $10^{16}$ Ohm • cm, einem kubischen Wärmeausdehnungskoeffizienten von (120 bis 240) • $10^{-7} K^{-1}$, gemessen zwischen 20 und 300°C, und einer Fluidität von 50 bis 90 g/30 sec aufgemahlen werden.

In einer bevorzugten Verfahrensweise werden die den Engobepulvern entsprechenden Engobe-Komponenten mit Polymethylhydrogensiloxanen der Formel

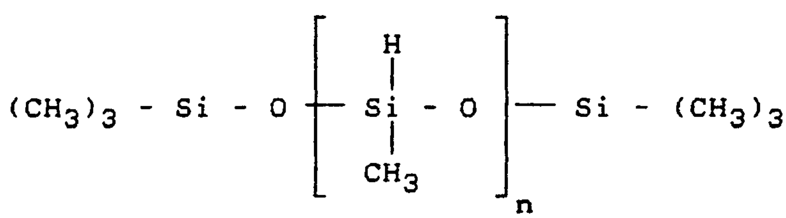

mit n = 5 bis 50 oder Gemischen davon behandelt.

Die erfindungsgemäßen Engobepulver werden für den elektrostatischen Pulverauftrag auf keramische Substrate verwendet.

Die erfindungsgemäße elektrostatische Trockenpulverbeschichtung hat gegenüber anderen Techniken erhebliche Vorteile. Diese zeigen sich in erster Linie bei der elektrostatischen Serienbeschichtung von keramischen Substraten mit Pulvern für den Weiß-, Transparent- oder Farbauftrag im Einbrandverfahren (Monocottura), weil sich hier der elektrostatische Pulverauftrag der Engobe dem Arbeitsverfahren und Materialfluß harmonisch anpaßt.

So wird für den Pulverauftrag der Engobe lediglich eine elektrostatische Beschichtungskabine in die Auftragslinie vorgeschaltet, so daß die beiden Schichten, d.h. Engobe + Glasur gemeinsam eingebrannt werden können. Es entfällt die Naßvermahlung der Engobe für den Naßauftrag, bei der waßrige Suspensionen verwendet werden. Es entfällt zudem der Trockenprozeß, um die Schlickerschichten vor dem Einbrand zu entwässern.

Einen besonderen Vorteil bietet das elektrostatische Beschichtungsverfahren mit den Engoben insoweit, als keine Flüssigkeiten als Medium verwendet werden müssen und somit wesentlich dünnere Substrate zum Einsatz kommen können, da diese bei der elektrostatischen Trockenbeschichtung nicht aufquellen und deshalb Deformationen vermieden werden (ca. 3 mm anstelle von 6 bis 9 mm).

Darüberhinaus ergibt sich ein wesentlich geringerer Materialverbrauch, da das erfindungsgemäße Engobepulver in elektrostatischen Auftragskabinen mit einem Wirkungsgrad von > 98 % abgeschieden wird.

Beim elektrostatischen Auftrag bleiben die Pulver außerdem in einem geschlossenen System und die aus der Kabine austretende Luft wird über Filter gereinigt. Dies bietet wesentliche Vorteile unter ökologischem Aspekt, vor allem, wenn ökologisch bedenkliche Produkte eingesetzt werden. Ein derartig geschlossenes Auftragssystem ist weder beim konventionellen Trocken- noch beim Naßauftrag gegeben.

Die elektrostatische Auftragstechnik der Engobepulver bietet zudem eine wesentliche Vereinfachung des gesamten Beschichtungsverfahrens und eine beachtliche Raumersparnis, weil der Auftragsprozeß auf dem Fließband erfolgt und der Apparateaufwand auf eine elektrostatische Kabine mit gesteuerten Pulverdüsen beschränkt bleibt.

Voraussetzung für eine elektrostatische Pulverbeschichtung mit Engoben auf keramische Oberflächen sind Pulver, deren Komponenten (aufgemahlene, geschmolzene Fritten, feinteilige Keramikrohstoffe, gemahlene Mineralien, Glas- bzw. Porzellanmehl und anorganische Trübungsmittel) ein annähernd gleiches spezifisches Gewicht aufweisen und nach der Behandlung mit elektrisch isolierenden Substanzen sowie einer Wärmebehandlung während oder nach der Vermahlung einen spezifischen Widerstand der gleichen Größenordnung in Ohm/cm zeigen, um Entmischungseffekte, speziell beim Umlauf der Pulver in der elektrostatischen Beschichtungskabine, zu vermeiden.

Die Erfindung soll anhand nachfolgender Beispiele näher erläutert werden, ohne daß hierin eine Einschränkung zu sehen ist.

Beispiel 1

Eine 1.000 kg-Mühle wird wie folgt beladen:

| | |
|---|---|
| 1.850 kg | Alubit-Kugeln mit einem Durchmesser von 32 bis 45 mm |
| 500 kg | einer Fritte in Schuppen- oder Granalienform, die als Engobebestandteil geeignet ist, bestehend aus: 52,5 Gew.% $SiO_2$, 9,8 Gew.-% $B_2O_3$, 7,1 Gew.-% $Al_2O_3$, 5,1 Gew.-% ZnO, 6,9 Gew.-% CaO, 2,0 Gew.-% MgO, 5,2 Gew.-% $K_2O$, 1,2 Gew.-% $Na_2O$, 10,2 Gew.-% $ZrO_2$ und folgenden Zusätzen: |
| 100 kg | Zirkonsilikat |
| 100 kg | Kalifeldspat |
| 100 kg | Amblygonit |
| 200 kg | vermahlenes Geschirrporzellan und |
| 1,2 kg | Gemisch von Polymethylhydrogensiloxanen (= 0,12 Gew.-%) der Formel |

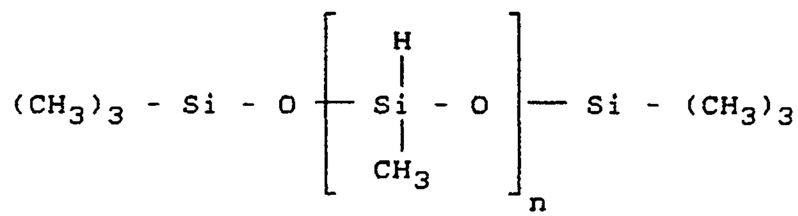

mit n = 5 bis 50. Vor dem Schließen der Kugelmühle wird der Innenraum mit Stickstoffgas gespült, um den Sauerstoff zu eliminieren.

Das Material wird ca. 6 Stunden gemahlen, um die gewünschte Feinheit zu erlangen, d.h. eine Korngrößenverteilung von

| | | | | |
|---|---|---|---|---|
| 100 | Gewichtsprozent | unter | 120 | mikron |
| ca. 80 | " | " | 30 | " |
| ca. 60 | " | " | 20 | " |
| ca. 40 | " | " | 15 | " |

Während der Vermahlung steigt die Temperatur im Innern der Mühle auf ca. 80°C.

Das Pulver weist nach der Vermahlung einen spezifischen Widerstand von $10^{16}$ Ohm • cm auf, ein Fließverhalten von 50 - 70 g/30 sec, gemessen mit einem Gerät der Fa. SAMES und einen kubischen Wärmeausdehnungskoeffizienten von (195) • $10^{-7}K^{-1}$.

Die Bestimmung der Fluidität erfolgt mit einem Gerät der Fa. SAMES, Grenoble. Die Meßmethode wird in einer Veröffentlichung von Dr. H. J. Schittenhelm in Journal des VDEFa, Band 32 (1984), Heft 10, Seiten 137 bis 148 ausführlich beschrieben.

Der optimale Fließwert für den elektrostatischen Auftrag liegt zwischen 50 und 90 g/30 sec. Werte unter 50 g/30 sec und speziell unter 40 g/30 sec sind als kritisch zu betrachten, insoweit als sie Auftragsschwierigkeiten verursachen aufgrund mangelnden Fließverhaltens.

Beispiel 2

Die Vermahlung erfolgt in einer 1 kg-Mühle mit 3 kg Mahlkugeln aus Steatit mit einem Durchmesser von 20 bis 40 mm. Der Mahlkörper wird mit 1 kg einer keramischen Engobe entsprechend der Zusammensetzung laut Beispiel 1 und 1,5 g (= 0,15 Gew.-%) Polymethylhydrogensiloxangemisch beschickt.

Die Trockenvermahlung bis zur gewünschten Korngrößenverteilung, wie unter Beispiel 1 beschrieben, erfolgt innerhalb von 4 Stunden. Die Temperatur des Mahlgutes liegt nur unwesentlich über der Zimmertemperatur. Der spezifische Widerstand beträgt $3{,}0 \times 10^{15}$ Ohm • cm, das Fließverhalten liegt bei 5 g/30 sec. Damit ist das Mahlgut für einen elektrostatischen Auftrag ungeeignet. Das Mahlgut wird deshalb 8 Stunden auf 120 °C erhitzt. Nach dieser Wärmebehandlung steigt der Fließwert auf 60 g/ 30 sec bei einem spezifischen Widerstand von $10^{16}$ Ohm • cm. Das Material läßt sich jetzt einwandfrei verarbeiten.

Anstelle der diskontinuierlichen Kugelmühlen können kontinuierliche Mahlaggregate verwendet werden wie z.B. Schwing- oder Hardinge-Mühlen. Erstere entwickeln eine Mahltemperatur von ca. 100 °C, während letztere von außen beheizt werden müssen, um die erforderliche Temperatur von 70 bis 100 °C zu erzielen. In beiden Fällen muß eine Mischmühle, die nur mit wenigen Schwermahlkugeln beladen ist, vorgeschaltet werden, um eine Homogenisierung des Mahlgutes mit den isolierenden Substanzen zu gewährleisten. Wenn die Vermahlung bei niedrigen Temperaturen durchgeführt wird, muß das Mahlgut anschließend thermisch nachbehandelt werden und zwar 2 bis 8 Stunden je nach Temperatureinstellung (Temperaturbereich 70 bis 300 °C).

## Patentansprüche

1. Keramische Engoben in Pulverform, enthaltend geschmolzene, gemahlene, keramische Fritten und gemahlene, keramische Rohstoffe, feinteilige Mineralien, Glas- bzw. Geschirrporzellanmehl und anorganische Trübungsmittel für den elektrostatischen Pulverauftrag auf keramische Substrate mit einer mit elektrisch isolierenden Substanzen behandelten Oberfläche, dadurch gekennzeichnet, daß die elektrisch isolierenden Substanzen halogenfreie Polysiloxane oder Gemische davon sind und mit ihren reaktiven Gruppen an den Kornoberflächen der Engobepulver reagieren und in einer Menge von 0,05 bis 0,25 Gew.-%, bezogen auf die keramische Engobe, vorliegen und daß das Pulver, welches bei einer Temperatur von 70 °C bis 100 °C gemahlen wurde bzw nach einer Kaltvermahlung zwischen 70 und 300 °C thermisch nachbehandelt wurde, eine Mahlfeinheit von 1 bis 120 $\mu$, einen spezifischen elektrischen Widerstand von $10^{13}$ bis $10^{16}$ Ohm • cm, einen kubischen Wärmeausdehnungskoeffizienten von (120 bis 240) • $10^{-7}K^{-1}$, gemessen zwischen 20 und 300 °C, sowie eine Fluidität von 50 bis 90 g/30 sec aufweist.

2. Keramische Engobepulver nach Anspruch 1, dadurch gekennzeichnet, daß als Polysiloxane Polymethylhydrogensiloxane der Formel

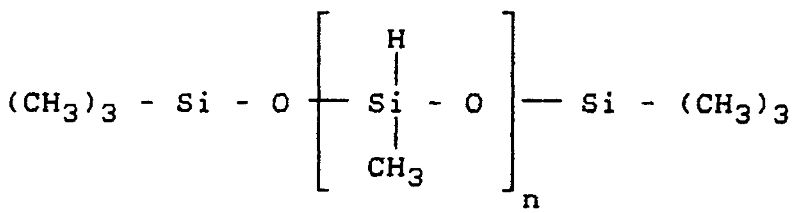

mit n = 5 bis 50 oder Gemischen davon eingesetzt werden.

3. Verfahren zur Herstellung von keramischen Engobepulvern gemäß Anspruch 1 oder 2 mit einer mit elektrisch isolierenden Substanzen behandelten Oberfläche, dadurch gekennzeichnet, daß die den Engobepulvern entsprechenden Gemische aus geschmolzenen keramischen Fritten, keramischen Rohstoffen, Mineralien, Gläsern, Geschirrporzellan und anorganischen Trübungsmitteln vor oder während der bei 70 bis 100 °C durchzuführenden, gemeinsamen, trockenen Mahlung bzw. vor oder während einer gemeinsamen Kaltvermahlung mit anschließender thermischer Nachbehandlung zwischen 70 und 300 °C mit 0,05 bis 0,25 Gew.-%, bezogen auf die Gesamtmenge, halogenfreien mit ihren reaktiven Gruppen an den Kornoberflächen der keramischen Engoben reagierenden Polysiloxanen oder Gemischen davon behandelt werden und zu Pulvern mit einer Korngröße von 1 bis 120 $\mu$, einem spezifischen elektrischen Widerstand von $10^{13}$ bis $10^{16}$ Ohm • cm, einem kubischen Wärmeausdehnungskoeffizienten von (120 bis 240) • $10^{-7}K^{-1}$, gemessen zwischen 20 und 300 °C, und einer Fluidität von 50 bis 90 g/30 sec aufgemahlen werden.

4. Verfahren zur Herstellung von keramischen Engobepulvern nach Anspruch 3, dadurch gekennzeichnet,

daß die den Engobepulvern entsprechenden Gemische mit Polvmethylhydrogensiloxanen der Formel

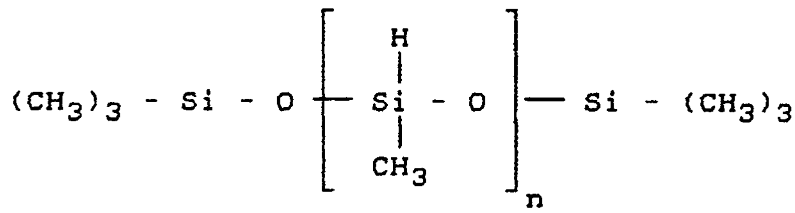

mit n = 5 bis 50 oder Gemischen davon behandelt werden.

**5.** Verwendung der keramischen Engoben in Pulverform nach Anspruch 1 oder 2 für den elektrostatischen Pulverauftrag auf keramischen Substraten.

**Patentansprüche für folgenden Vertragsstaat: ES**

**1.** Verfahren zur Herstellung von keramichen Engobepulvern, enthaltend geschmolzene, gemahlene, keramische Fritten und gemahlene, keramische Rohstoffe, feinteilige Mineralien, Glas- bzw. Geschirrporzellanmehl und anorganische Trübungsmittel mit einer mit elektrisch isolierenden Substanzen behandelten Oberfläche für den elektrostatischen Pulverauftrag auf keramische Substrate, dadurch gekennzeichnet, daß die den Engobepulvern entsprechenden Gemische aus geschmolzenen keramischen Fritten, keramischen Rohstoffen, Mineralien, Gläsern, Geschirrporzellan und anorganischen Trübungsmitteln vor oder während der bei 70 bis 100 °C durchzuführenden, gemeinsamen, trockenen Mahlung bzw. vor oder während einer gemeinsamen Kaltvermahlung mit anschließender thermischer Nachbehandlung zwischen 70 und 300 °C mit 0,05 bis 0,25 Gew.-%, bezogen auf die Gesamtmenge, halogenfreien mit ihren reaktiven Gruppen an den Kornoberflächen der keramischen Engoben reagierenden Polysiloxanen oder Gemischen davon behandelt werden und zu Pulvern mit einer Korngröße von 1 bis 120 μ, einem spezifischen elektrischen Widerstand von $10^{13}$ bis $10^{16}$ Ohm • cm, einem kubischen Wärmeausdehnungskoeffizienten von (120 bis 240) • $10^{-7}K^{-1}$, gemessen zwischen 20 und 300 °C, und einer Fluidität von 50 bis 90 g/30 sec aufgemahlen werden.

**2.** Verfahren zur Herstellung von keramischen Engobepulvern nach Anspruch 1 , dadurch gekennzeichnet, daß die den Engobepulvern entsprechenden Gemische mit Polymethylhydrogensiloxanen der Formel

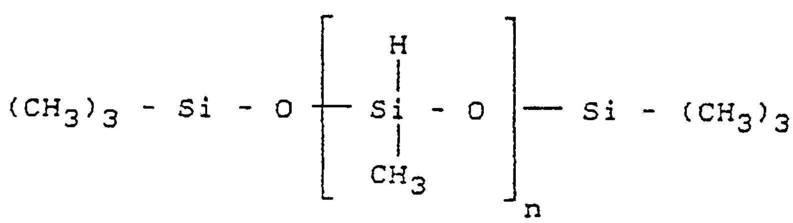

mit n = 5 bis 50 oder Gemischen davon behandelt werden.

Europäisches Patentamt

# EUROPÄISCHER RECHERCHENBERICHT

Nummer der Anmeldung

**EP 90 12 4690**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DERWENT WORLD PATENT INDEX, Accession Nr. 89-289240 [40], Derwent Publications Ltd, Londen, GB; & JP-A-1 212 250 (HOSOKAWA MICRON K.K.) 25-08-1989 * Ganze Zusammenfassung * | 1-5 | C 03 C 8/14<br>C 04 B 41/87 |
| Y | FR-A-2 439 046 (USTAV PRE ROZVOJ STROJARSKEHO SPOTREBNEHO TOVARU) * Seite 2, Zeilen 6-36 * | 1-5 | |
| P,X | DE-A-3 909 656 (J. LEITSCH) * Seite 3, Beispiel; Patentansprüche * | 3-5 | |
| X | DE-A-3 700 702 (BAYER AG) * Patentansprüche * | 3-5 | |
| P,X | EP-A-0 382 003 (BAYER ITALIA S.p.A.) * Ansprüche * | 1-5 | |

RECHERCHIERTE SACHGEBIETE (Int. Cl.5)

C 03 C
C 04 B

Der vorliegende Recherchenbericht wurde für alle Patentansprüche erstellt

| Recherchenort | Abschlußdatum der Recherche | Prüfer |
|---|---|---|
| Den Haag | 22 April 91 | BOUTRUCHE J.P.E. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument